# EUROPÄISCHE PATENTSCHRIFT

(11) **EP 3 002 079 B1**
(45) Veröffentlichungstag und Bekanntmachung des Hinweises auf die Patenterteilung: **09.09.2020**
(21) Anmeldenummer: 15185631.7
(22) Anmeldetag: 17.09.2015
(51) Int. Cl.: B23Q 7/14, B60M 1/30

(54) **LAUFBAHNSYSTEM**
RACEWAY SYSTEM
SYSTEME DE GLISSIERE

(30) Priorität: 01.10.2014 DE 202014007857 U
(43) Veröffentlichungstag der Anmeldung: 06.04.2016
(73) Patentinhaber: Ceratis GmbH, 56307 Dernbach (DE)
(72) Erfinder: Krups, Peter, 56584 Anhausen (DE)
(74) Vertreter: dompatent von Kreisler Selting Werner - Partnerschaft von Patent- und Rechtsanwälten mbB

(56) Entgegenhaltungen:
- EP-A1- 0 773 087
- WO-A1-98/36958
- US-A- 4 207 821
- US-A- 4 776 282

## Beschreibung

Die Erfindung betrifft ein Laufbahnsystem für angetriebene Werkstückträger.

Zum Transport von beispielsweise zu bearbeitenden oder zu montierenden Werkstücken sind, neben beispielsweise von Ketten angetriebene Fördersysteme, auch angetriebene Werkstückträger, d.h. selbstfahrende Werkstückträger bekannt. Diese Werkstückträger weisen einen Motor auf, der zwei der beispielsweise vier Räder des Werkstückträgers antreibt. Der Werkstückträger kann beispielsweise unmittelbar auf dem Boden oder auf einem Laufbahnsystem fahren. Ein derartiges Laufbahnsystem weist insbesondere zwei Laufbahnen auf, auf denen jeweils eine Spur eines Werkstückträgers läuft. Das Laufbahnsystem weist somit in Fahrtrichtung des Werkstückträgers eine linke und eine rechte Laufbahn auf. Das Laufbahnsystem kann hierbei beispielsweise auf einem Ständersystem angeordnet sein, so dass das Werkstück auf einer, beispielsweise für die Montage gut zugänglichen Höhe bewegt wird. Zur Energiezufuhr zu dem Elektromotor ist es bekannt, seitlich neben dem Laufbahnsystem eine Energieschiene zur Energiebereitstellung vorzusehen. Die Energiezufuhr erfolgt hierbei über einen Schleifkontakt der an der Energieschiene bzw. der Stromschiene anliegt. Bekannte Laufbahnsysteme weisen eine Seitenwand auf, die seitlich neben dem Werkstückträger angeordnet ist. In dieser Seitenwand ist die Energieschiene angeordnet. Derartige Laufbahnsysteme weisen insbesondere den Nachteil auf, dass die Energieschiene verschmutzen kann und daher regelmäßig gereinigt werden muss, um eine zuverlässige Energieübertragung zu gewährleisten.

Aus WO 98/36958 A ist ein Laufbahnsystem nach dem Oberbegriff des Anspruchs 1 bekannt. Zum technischen Umfeld wird weiterhin auf die US 4,776,282 A verwiesen.

Aufgabe der Erfindung ist es, ein Laufbahnsystem zu schaffen, bei dem eine zuverlässige Energiebereitstellung gewährleistet ist.

Die Lösung der Aufgabe erfolgt erfindungsgemäß durch die Merkmale des Anspruchs 1.

Das erfindungsgemäße Laufbahnsystem für angetriebene, d.h. selbstfahrende Werkstückträger weist zwei Laufbahnen auf, auf denen jeweils eine Spur eines Werkstückträgers läuft. Ferner ist zumindest eine Energieschiene zur Energiebereitstellung vorgesehen. Die Energieübertragung erfolgt hierbei insbesondere über einen Stromabnehmer, wie einen Schleifer an einen Elektromotor des Werkstückträgers. Erfindungsgemäß ist die Energieschiene an einer Unterseite einer der beiden Laufbahnen angeordnet. Durch das Anordnen der Energieschiene an der Unterseite einer der beiden Laufbahnen ist diese vor Verschmutzung geschützt. Des Weiteren ist hierdurch auch die Gefahr des Beschädigens der Energieschiene verringert. So ist es beispielsweise möglich, ein derartiges Laufbahnsystem auch zu begehen, ohne dass ein Beschädigen der Laufbahn oder der Energieschiene zu befürchten ist. Vorzugsweise ist die Energieschiene an einer inneren Seite der Laufbahn angeordnet. Dies hat den Vorteil, dass der Stromabnehmer des Werkstückträgers nicht außen am Werkstückträger, sondern an der Innenseite des Werkstückträgers angeordnet sein kann und somit ebenfalls vor Beschädigungen geschützt ist.

Erfindungsgemäß ist die Energieschiene von einer Innenwand der Laufbahn seitlich abgedeckt. Die Laufbahn weist somit vorzugsweise eine sich von einer Oberseite, die die Lauffläche ausbildet, nach unten erstreckende Innenwand auf. Die Energieschiene ist in dieser bevorzugten Ausführungsform unterhalb der Lauffläche, d.h. an der Unterseite der Laufbahn und innerhalb einer Innenwand der Laufbahn angeordnet. Dies bewirkt ein weiteres Schützen der Energieschiene. Vorzugsweise ist die Energieschiene nach unten geöffnet, so dass der Schleifkontakt von unten in die Energieschiene eingreift.

Insbesondere weist die Energieschiene ein Trägerprofil aus Kunststoff auf, in dem mehrere Leiter, insbesondere Kupferleiter angeordnet sind. Hierbei ist es besonders bevorzugt, dass die Kupferleiter in das Kunststoffprofil in Längsrichtung eingeschoben sind. Dies hat den Vorteil, dass die Leiter nicht durch Schrauben oder dergleichen in dem Trägerprofil befestigt werden müssen. Schrauben oder dergleichen würden zu einem erhöhten Verschleiß an den Stromabnehmern führen.

Bei einer weiteren bevorzugten Ausführungsform werden über zumindest einen Leiter auch Steuerdaten zur Steuerung des Werkstückträgers übertragen. Insofern sind beispielsweise drei Leiterbahnen vorgesehen, wobei über eine der Leiterbahnen eine Datenübertragung erfolgt. Vorzugsweise können die Daten für die Datenübertragung auch auf eine Stromleitung aufmoduliert werden, so dass nur zwei Leiterbahnen erforderlich sind.

Um einen Übergang zwischen zwei in Längsrichtung aneinanderstoßenden Leiterbahnen zu gewährleisten, kann eine Steckverbindung vorgesehen sein. Es ist auch möglich, dass die beiden Leiterbahnen in einem geringen Abstand zueinander enden, wobei die einzelnen Leiterbahnen, um den Verschleiß der Schleifkontakte zu verringern, geringfügig nach oben abgekantet sind.

Um eine sichere Energiezufuhr zu dem Elektromotor des Werkstückträgers zu gewährleisten, weist jeder Werkstückträger vorzugsweise zwei in Längsrichtung hintereinander angeordnete Stromabnehmer auf. Es ist auch möglich, dass unter beiden Laufbahnen eine Energieschiene angeordnet ist.

Dies hat beispielsweise den Vorteil, dass ein Werkstückträger, der nur auf einer Seite Stromabnehmer aufweist, in unterschiedlichen Positionen in ein Laufbahnsystem eingesetzt werden kann. Dies ist beispielsweise vorteilhaft, wenn ein Werkstückträger zwischen zwei in einem Winkel zueinander stehenden Laufbahnsystemen über ein Drehscheibensystem oder dergleichen verbunden ist.

Bei einer besonders bevorzugten Weiterbildung des Laufbahnsystems sind an der Unterseite der Laufbahnen Stützprofile angeordnet. Insbesondere ist die Energieschiene beispielsweise über ein Verbindungselement mit dem Stützprofil verbunden. Dies hat den Vorteil, dass die Energieschiene nicht unmittelbar mit der Laufbahn verbunden werden muss. Hierdurch kann gewährleistet werden, dass die Lauffläche der Laufbahn eben ist und beispielsweise keine Schrauben oder dergleichen die Laufbahn beeinträchtigen. Des Weiteren weist ein derartiges Stützprofil den Vorteil auf, dass über dieses die Laufbahn beispielsweise mit einem Ständersystem, versteifenden Querprofilen und dergleichen verbunden werden kann.

Besonders bevorzugt ist es, bei dem erfindungsgemäßen Laufbahnsystem, dass die Laufbahnen eine flache, als Lauffläche dienende Oberseite aufweisen. Aufgrund der Anordnung der Energieschiene auf einer Unterseite der Laufbahn, ist es nicht erforderlich, dass die Laufbahn eine Seitenwand aufweist, die horizontal über die Oberseite vorsteht. Dies hat insbesondere den Vorteil, dass beispielsweise bei einem Begehen des Laufbahnsystems durch eine Person keine Hindernisse bestehen und somit beispielsweise auch die Gefahr des Stolperns verringert ist.

Nachfolgend wird die Erfindung anhand einer bevorzugten Ausführungsform unter Bezugnahme auf die anliegenden Zeichnungen näher erläutert.

Es zeigen:
- Figur 1: eine schematische Schnittansicht eines Laufbahnsystems und

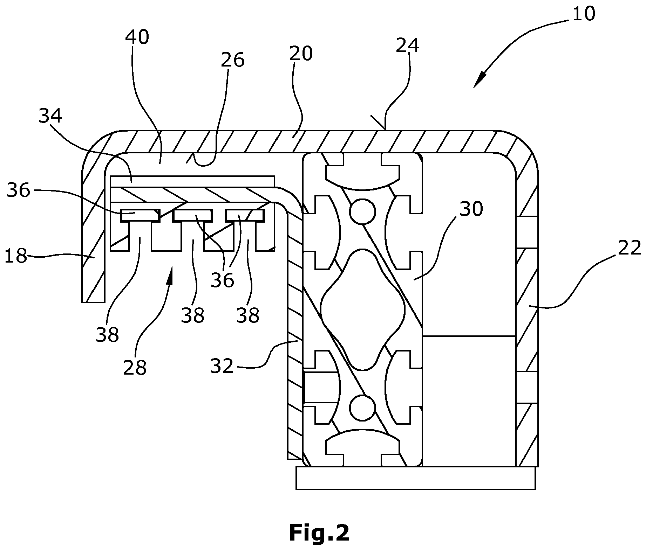

- Figur 2: eine schematische Schnittansicht einer Laufbahn, etwa in Originalgröße entsprechend des Bereichs II in Figur 1.

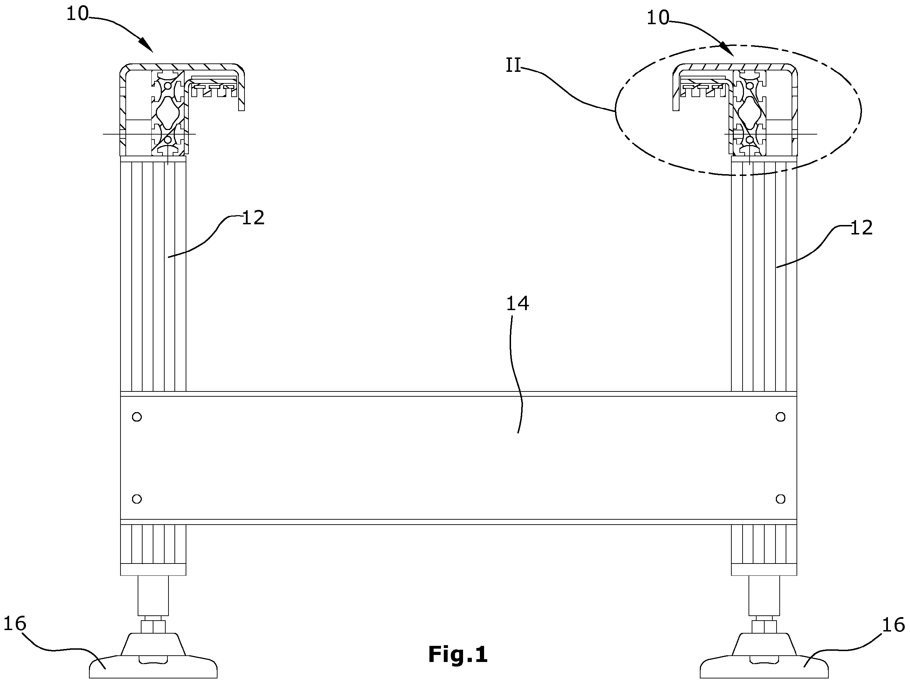

Das in Figur 1 dargestellte Laufbahnsystem weist zwei Laufbahnen 10 auf. Jede Laufbahn 10 ist mit Ständern 12 verbunden, die in Längsrichtung der Laufbahn 10 beispielsweise in regelmäßigen Abständen zueinander angeordnet sind. Die Ständer 12 sind über Versteifungsprofile 14 miteinander verbunden und weisen jeweils Standfüße 16 auf. Über die Standfüße 16 kann eine Höhenjustage erfolgen.

Die beiden Laufbahnen 10 weisen ein im Querschnitt im Wesentlichen U-förmiges Laufbahnelement auf, das sich aus einer Innenwand 18, einem Oberteil 20 und einer Außenwand 22 zusammensetzt. Das Oberteil 20 weist eine die Lauffläche ausbildende Oberseite 24 auf. Auf der Oberseite 24 rollen die Räder des Werkstückträgers. Erfindungsgemäß erstreckt sich vorzugsweise kein Bauteil der Laufbahn 10 horizontal über die Oberseite 24 hinaus.

Erfindungsgemäß ist an einer Unterseite 26 der Laufbahn 10, d.h. insbesondere an einer Unterseite des Oberteils 20 eine Energieschiene 28 angeordnet. Hierbei muss die Energieschiene 28 nicht unmittelbar an der Unterseite 26 angeordnet sein. Vielmehr erfolgt dies in bevorzugter Ausführungsform, wie in den Figuren dargestellt, über ein Trägerprofil 30. Das Trägerprofil 30 trägt das U-förmige Laufbahnelement und ist mit der Unterseite 26 des Oberteils 20 des Laufbahnelements verbunden. Die Energieschiene weist ein winkelförmiges Trägerelement 32 auf, das einen Kunststoffträger 34 der Energieschiene trägt und zum Befestigen an dem Trägerprofil 30 dient.

Das Trägerprofil 34, das insbesondere aus Kunststoff hergestellt ist, weist drei in Längsrichtung verlaufende Kanäle auf, in die jeweils ein Kupferleiter 36 in Längsrichtung eingeschoben ist. Durch die Öffnungen 38 greift ein nicht dargestellter Abnehmer, wie ein Stromschleifer, in die Energieschiene 28 ein, so dass ein elektrischer Kontakt zu den Leitern 36 hergestellt ist.

In einem Zwischenraum 40 zwischen der Unterseite 26 und der Energieschiene 28 kann ein Stromzufuhrkabel oder dergleichen angeordnet werden.

In der dargestellten erfindungsgemäß bevorzugten Ausführungsform ist die Energieschiene auf einer inneren Seite der Laufbahn 10, insbesondere zwischen dem Stützprofil 30 und der Innenwand 18 angeordnet.

Im dargestellten Ausführungsbeispiel dient das Stützprofil 30 ferner zur Verbindung mit den Ständern 12, wobei zu einer guten und gleichmäßigen Kraftübertragung zusätzlich auch die Außenseite 22 auf einer Oberseite der Ständer aufliegt. Die Kraftübertragung von dem Werkstückträger erfolgt somit sowohl über das Stützprofil 30 als auch über die Außenwand 22 auf die Ständer 12.

Die Anordnung der Energieschiene 28 an der Unterseite einer oder beider Laufbahnen 10 weist insbesondere den Vorteil auf, dass bei einer geschützten Anordnung der Energieschiene 28 ein großer Zwischenraum zwischen den beiden Laufbahnen 10 realisiert werden kann. Dies ist für die Zugänglichkeit von auf dem Werkstückträger befindlichen Werkstücken vorteilhaft.

## Patentansprüche

1. Laufbahnsystem für angetriebene Werkstückträger, mit zwei Laufbahnen (10), auf denen jeweils eine Spur eines Werkstückträgers läuft und
einer Energieschiene (28) zur Energiebereitstellung für einen den Werkstückträger antreibenden Elektromotor,
wobei die Energieschiene (28) an einer Unterseite (26) einer der beiden Laufbahnen angeordnet ist, **dadurch gekennzeichnet, dass** die Energieschiene (28) von einer Innenwand (18) der Laufbahn (10) seitlich abgedeckt ist.

2. Laufbahnsystem nach Anspruch 1, **dadurch gekennzeichnet, dass** die Energieschiene (28) an einer inneren Seite der Laufbahn (10) angeordnet ist.

3. Laufbahnsystem nach Anspruch 1 oder 2, **dadurch gekennzeichnet, dass** die Energieschiene (28) an einem an der Unterseite (26) der Laufbahn (10) angeordneten Stützprofil (30) befestigt ist.

4. Laufbahnsystem nach einem der Ansprüche 1 bis 3, **dadurch gekennzeichnet, dass** die Energieschiene (28) ein Trägerprofil (36) vorzugsweise aus Kunststoff aufweist, in dem mehrere Leiter (36) angeordnet, insbesondere eingeschoben sind.

5. Laufbahnsystem nach einem der Ansprüche 1 bis 4, **dadurch gekennzeichnet, dass** je Laufbahn eine Energieschiene (28) vorgesehen ist.

6. Laufbahnsystem nach einem der Ansprüche 1 bis 5, **dadurch gekennzeichnet, dass** die Laufbahnen (10) eine flache als Lauffläche dienende Oberseite (24) aufweisen.

## Claims

1. A running track system for driven workpiece carriers, comprising two running tracks (10) on each of which a track of a workpiece carrier is running, and
an energy rail (28) for providing energy for an electric motor driving the workpiece carrier,
wherein the energy rail (28) is arranged at a lower side (26) of one of the two running tracks, **characterized in that** the energy rail (28) is laterally covered by an inner wall (18) of the running track (10).

2. The running track system according to claim 1, **characterized in that** the energy rail (28) is arranged at an inner side of the running track (10).

3. The running track system according to claim 1 or 2, **characterized in that** the energy rail (28) is mounted to a support profile (30) being arranged at the lower side (26) of the running track (10).

4. The running track system according to one of claims 1 to 3, **characterized in that** the energy rail (28) comprises a carrier profile (36), preferably of plastic, in which a plurality of conductors (36) are arranged, in particular inserted.

5. The running track system according to one of claims 1 to 4, **characterized in that** for each running track one energy rail (28) is provided.

6. The running track system according to one of claims 1 to 5, **characterized in that** the running tracks (10) comprise a flat upper side (24) serving as a running surface.

## Revendications

1. Système de glissière pour porte-pièce entraîné, doté
de deux glissières (10), sur chacune desquelles passe une piste d'un porte-pièce et
d'un rail d'énergie (28) destiné à fournir de l'énergie à un moteur électrique entraînant le porte-pièce,
dans lequel le rail d'énergie (28) est agencé sur une face inférieure (26) d'une des deux glissières, **caractérisé en ce que** le rail d'énergie (28) est recouvert latéralement par une paroi interne (18) de la glissière (10).

2. Système de glissière selon la revendication 1, **caractérisé en ce que** le rail d'énergie (28) est agencé sur un côté interne de la glissière (10).

3. Système de glissière selon la revendication 1 ou 2, **caractérisé en ce que** le rail d'énergie (28) est fixé à un profil de support (30) agencé sur la face inférieure (26) de la glissière (10).

4. Système de glissière selon l'une des revendications 1 à 3, **caractérisé en ce que** le rail d'énergie (28) comporte un profil porteur (36) de préférence en plastique, à l'intérieur duquel plusieurs conducteurs (36) sont agencés, en particulier insérés.

5. Système de glissière selon l'une des revendications 1 à 4, **caractérisé en ce qu'**un rail d'énergie (28) par glissière est prévu.

6. Système de glissière selon l'une des revendications 1 à 5, **caractérisé en ce que** les glissières (10) comportent une face supérieure (24) plate servant de surface de roulement.
